# EUROPÄISCHE PATENTSCHRIFT

(11) **EP 1 257 451 B1**
(45) Veröffentlichungstag und Bekanntmachung des Hinweises auf die Patenterteilung: **07.04.2004**
(21) Anmeldenummer: 01909448.1
(22) Anmeldetag: 11.01.2001
(51) Int. Cl.: B60T 1/00

(54) **STEUERSCHALTUNG FÜR EIN STEUERBARES ELEKTRO-MAGNETVENTIL EINER BREMSANLAGE EINES KRAFTFAHRZEUGS**
CONTROL CIRCUIT FOR A CONTROLLED ELECTRO-MAGNETIC VALVE OF AN AUTOMOTIVE BRAKING SYSTEM
CIRCUIT DE COMMANDE D'UNE SOUPAPE ELECTROMAGNETIQUE COMMANDABLE D'UN SYSTEME DE FREINAGE AUTOMOBILE

(30) Priorität: 08.02.2000 DE 10005424
(43) Veröffentlichungstag der Anmeldung: 20.11.2002
(73) Patentinhaber: ROBERT BOSCH GMBH, 70442 Stuttgart (DE)
(72) Erfinder: RADER, Thomas, 72764 Reutlingen (DE); HAEUSSLER, Alexander, 69117 Heidelberg (DE); KAESTNER, Frank, 74321 Bietigheim-Bissingen (DE)
(86) Internationale Anmeldenummer: PCT/DE2001/000078
(87) Internationale Veröffentlichungsnummer: WO 2001/058736

(56) Entgegenhaltungen:
- WO-A-95/03196
- WO-A-99/39957
- DE-A- 4 305 488
- DE-A- 19 654 427
- DE-A- 19 707 960

## Beschreibung

### Stand der Technik

Die Erfindung geht aus von einem steuerbaren Elektro-Magnetventil einer Bremsanlage eines Kraftfahrzeugs nach der Gattung des Hauptanspruchs. Aus der DE 43005488 A1 ist schon eine Steuerschaltung für ein Magnetventil bekannt. Bei dieser Steuerschaltung wird der Ansteuerstrom für das Magnetventil derart gesteuert, dass der Ventilverschlusskörper abgebremst wird, kurz bevor er von seiner Durchlassstellung in seine Schließstellung gebracht wurde. Dadurch wird erreicht, dass das Magnetventil geräuscharm schließt und somit störende Schallwellen sich nicht über das Bremssystem auf das Kraftfahrzeug übertragen können. Das geräuscharme Schließen wird dadurch erreicht, dass der Ansteuerstrom kurzzeitig ausgeschaltet wird, um mit einem Haltestrom den Ventilverschlußkörper in der Endstellung abzufangen.

Aus der DE 19707960 A1 ist desweiteren ein Verfahren und eine Vorrichtung zur Regelung des Drucks in einer Radbremse bekannt, wobei ein Regler zur Druckregelung aus den Druckverhältnissen an der Ventilanordnung ein Ansteuersignal bildet. Dabei ist zur Verbesserung der Regelqualität für die Druckregelung im Bremskreislauf jeweils eine Ventilanordnung zum Druckaufbau und zum Druckabbau vorgesehen. Durch Messen des Ist-Bremsdruckes und Vergleich mit dem Solldruck wird eine Differenz ermittelt, die mit einem geänderten Ansteursignal berücksichtigt wird. Der Zusammenhang zwischen dem Ansteuersignal und den Druckverhältnissen ist als Kennlinie für den Druckaufbau und/oder den Druckabbau gespeichert.

Aus der Schrift WO 99/39957 ist eine Bremssteuerung für Fahrzeuge bekannt, bei der ein bremssteuerndes Ausgangssignal in Abhängigkeit eines Bremsanforderungssignals erzeugt wird. Dabei wird das Bremsanforderungssignal mit einem konstanten Korrekturwert modifiziert, solange die Differenz zwischen der Bremsanforderung und dem Verzögerungssignal innerhalb eines vordefinierten Wertebereichs liegt. Liegt die Differenz innerhalb des Wertebereichs, so erfolgt keine Änderung des Korrekturwerts, wohingegen bei einem Verlassen des Wertebereichs eine Änderung des Korrekturwerts erfolgt.

### Vorteile der Erfindung

Die erfindungsgemäße Steuerschaltung für ein steuerbares Elektro-Magnetventil in einer Bremslage eines Kraftfahrzeugs mit den kennzeichnenden Merkmalen des Hauptanspruchs hat demgegenüber den Vorteil, dass ein Regler den Ist-Wertes der betrachteten Regelgröße überwacht und gegebenenfalls korrigierend eingreift. Dabei ist besonders vorteilhaft, dass die Regelgröße für den Ist-Wert sich stets innerhalb eines vorgegebenen Toleranzbandes befindet. Verlässt der Ist-Wert das vorgegebene Toleranzband, dann greift zusätzlich eine Korrektureinrichtung ein, die durch entsprechende Änderung des Ansteuerstromes für das Magnetventil den Ist-Wert in den Bereich des Toleranzbandes zurückführt. Dadurch wird vorteilhaft erreicht, dass beispielsweise in einer Bremsanlage sowohl ein leises oder geräuscharmes Schließen des Magnetventils erreicht wird und andererseits der Bremsdruck im Bremskreis unabhängig von der Funktion des Reglers einstellbar ist.

Durch die in den abhängigen Ansprüchen aufgeführten Maßnahmen sind vorteilhafte Weiterbildungen und Verbesserungen der im Hauptanspruch angegebenen Steuerschaltung möglich. Besonders vorteilhaft ist, dass die Korrektureinrichtung zur Änderung des Erregerstromes in Abhängigkeit von der Schließkraft des Magnetventils ausgebildet ist.

Durch entsprechende Kennlinien, die zuvor empirisch ermittelt wurden, ist die Schließkraft des Ventilverschlußkörpers wahlfrei einstellbar und wird unter Berücksichtigung des Druckes im Leitungssystem so gewählt, dass der Verschlusskörper beispielsweise nicht öffnet, wenn ein Anstieg des Leitungsdrucks aufgrund einer geänderten Regelgröße erfolgt. Ist beispielsweise als Regelgröße eine Strom-/Druck- Kennlinie (I/P- Kennlinie) gespeichert worden, dann lässt sich vorteilhaft der Steuerstrom für einen bestimmten Druckwert entsprechend der Kennlinie entnehmen.

Vorteilhaft ist weiter, dass beispielsweise zur Regelung der Fahrdynamik oder des Bremsverhaltens eines Fahrzeugs als Regelgröße die Bremsverzögerung, die Fahrzeuggeschwindigkeit und/oder Radschlupfwerte wählbar sind. Diese Regelgrößen werden insbesondere für den Antiblockierschutz (ABS) oder das elektronische Stabilitätsprogramm (ESP) benötigt.

Günstig ist weiterhin, dass die Korrektureinrichtung in Verbindung mit einem Abstandsregler (ACC), wie er auch in Verbindung mit einem Geschwindigkeitsregler eingesetzt wird, einen Bremseingriff vornimmt, wenn der Sollwert für den Abstand in Bezug auf die Fahrgeschwindigkeit aus Sicherheitsgründen zu gering wird.

Zur Ablage der Kennlinien für die Regelgröße und/oder das Toleranzband wird vorteilhaft ein Speicher vorgeschlagen. Ein geeigneter Speicher ist vorzugsweise ein EEPROM, weil dieser Speicher auch bei einem Spannungsausfall seine Informationen nicht verliert.

Eine günstige Lösung ist auch darin zu sehen, dass die Korrektureinrichtung einen Rechner aufweist, der mittels eines Softwareprogramms den Ist-Wert berechnet. Softwareprogramme haben den großen Vorteil, dass sie leicht modifizierbar sind, ohne dass aufwendige Verdrahtungen anfallen. Insbesondere bei einem Kraftfahrzeug mit einem Antiblockiersystem oder einem Fahrdynamikregler ergibt sich der Vorteil, dass durch eine entsprechende Erweiterung der bestehenden Steuerprogramme die Korrektur der Regelgröße einfach durchführbar ist.

### Zeichnung

Ein Ausführungsbeispiel der Erfindung ist in der Zeichnung dargestellt und in der nachfolgenden Beschreibung näher erläutert. Es zeigt Figur 1 ein Elektro-Magnetventil in geöffneter Durchlassstellung, Figur 2 zeigt ein Elektro-Magnetventil in Verschlussstellung, Figur 3 zeigt ein Blockschaltbild und Figur 4 zeigt ein Diagramm.

### Beschreibung

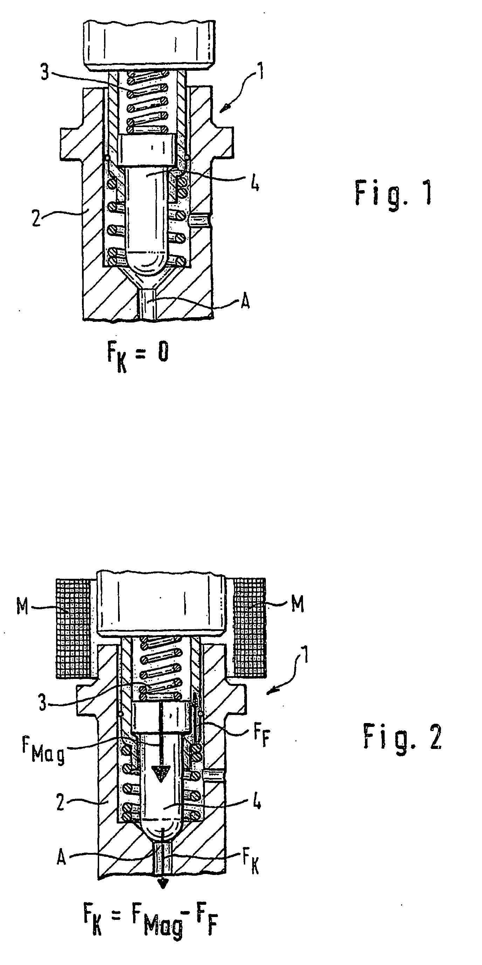

Zum besseren Verständnis zeigen die Figuren 1 und 2 ein Elektro-Magnetventil 1, bei dem ein Ventil-Verschlusskörper 4 in geöffneter (Figur 1) und geschlossener Stellung (Figur 2) dargestellt ist. Das Magnetventil 1 weist einen Ventilkörper 2 auf, in dem innerhalb einer Bohrung der Ventil-Verschlusskörper 4 angeordnet ist. Der Ventil-Verschlusskörper 4 ist im unteren Teil so ausgebildet, dass zwischen der Innenwandung des Ventilkörpers 2 und dem Verschlusskörper 4 ein Hohlraum entsteht, in den beispielsweise bei einem Bremssystem die Bremsflüssigkeit gepresst wird. Nach oben hin ist der Verschlusskörper 4 gegenüber der Innenwandung des Ventilkörpers 2 abgedichtet. Mittels einer oder mehrerer Federn 3 wird der Verschlusskörper 4 in seine Grundstellung gehalten, vorzugsweise in der geöffneten Stellung gemäß der Figur 1. An den Ventilkörper 2 ist im oberen Bereich eine geeignete, nicht näher dargestellte Magnetspule M angebracht, die von einem Erregerstrom durchflossen wird. Die sich ausbildende Magnetkraft wirkt auf den Ventil-Verschlusskörper 4 mit einer Magnetisierungskraft F_{Mag} gegen die Federkraft F_{F}, wie den Richtungspfeilen gemäß der Figur 2 entnehmbar ist. Die Verschlusskraft F_{K}, die auf die Kugelkalotte wirkt und mit der der Auslass A verschlossen wird, ergibt sich aus der Differenz zwischen der Magnetisierungskraft F_{Mag} und der Federkraft F_{F}. Die Verschlußkraft wird über den Erregerstrom für die Magnetspule so gesteuert, dass die gewünschte Bewegung und Haltekraft für den Ventil-Verschlusskörper 4 erreicht wird.

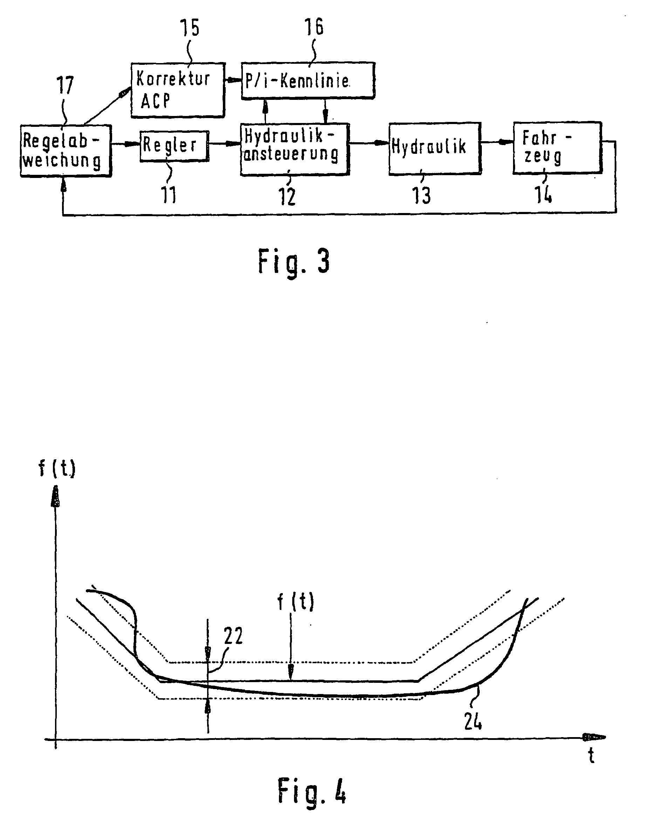

Die Funktionsweise der Erfindung wird nun anhand des Ausführungsbeispiels gemäß den Figuren 3 und 4 näher erläutert. Bei der Steuerung eines Elektro-Magnetventils 1 tritt grundsätzlich das Problem auf, dass Fertigungsstreuungen, beispielsweise die Größe des Restluftspaltes zwischen dem Ventilkörper 2 und dem treibenden Magneten, Temperatureinflüsse, Reibungseffekte und Verschleiß bei gleichen Ansteuerströmen für die Magnetspule zu unterschiedlichen Schließkräften führen können. Der Ansteuerstrom ist somit nicht nur in Abhängigkeit vom Differenzdruck über dem Ventil, sondern auch von den oben genannten unerwünschten Nebeneffekten abhängig. Eine vorgegebene Strom-/Druck- Kennlinie (I/P-Kennlinie) zur Ansteuerung des Ventil-Verschlusskörpers 4 führt daher zwangsläufig zu unterschiedlichen Verschlußkräften F_{K}, die nun durch eine Erhöhung oder Absenkung des entsprechenden Steuerstromes ausgeglichen werden können. Die Anhebung oder Absenkung des Steuerstromes mittels einer Regelung ergibt jedoch eine unerwünschte Zeitverzögerung, die bei den erforderlichen kurzen Reaktionszeiten nicht erwünscht ist. So muss beispielsweise bei einer Fahrdynamikregelung, wenn das Fahrzeug anfängt auszubrechen, möglichst sofort durch eine Bremsreaktion das entsprechende Rad des Kraftfahrzeugs abgebremst werden, um den Fahrzustand zu stabilisieren. Längere Reaktionszeiten sind daher nicht akzeptabel..

Die erfindungsgemäße Lösung geht daher gemäß der Figur 4 davon aus, dass die zu steuernde bzw. regelnde Regelgröße f(t) kontinuierlich gemessen wird. Als Regelgröße kann dabei bei einem Antiblockiersystem (ABS) oder einem Fahrzeugregler mit Stabilitätsprogramm (ESP) die Fahrzeugverzögerung, ein Radschlupf, die Fahrgeschwindigkeit, ein Drehwinkel oder eine sonstiger dynamischer Parameter sein, der das Fahrverhalten bestimmt. Die Regelgröße f(t) ist als Sollwert in dem Zeitdiagramm der Figur 4 vorgegeben. Darüber hinaus ist für die Regelgröße f(t) ein Toleranzband 22 vorgegeben, innerhalb dessen sich der Ist-Wert für die Regelgröße f(t) bewegen kann. Das Toleranzband verläuft um den Sollwert bzw. einen zeitlich verzögerten Sollwert. Im Normalbetrieb innerhalb des Toleranzbandes arbeitet der normale Regler mit dem gewünschten Komfort und der harmonischen Abstimmung. Außerhalb der Toleranzbandes erfolgt vorzugsweise ein stärkerer und härterer Eingriff in die Regelung.

Die Werte für die Regelgröße f(t) und/oder das Toleranzband 22 sind in Form einer Tabelle, einer Kennlinie oder sonst geeigneter Form in einem entsprechenden Speicher, beispielsweise in einem EEPROM abgelegt und somit für den Regler 11 jederzeit abgreifbar. Das Toleranzband 22 kann nach einer worst-case Betrachtung oder empirisch ermittelt werden.

Im Fahrbetrieb versucht nun der Regler 11 gemäß Figur 4 entsprechend der gemessenen Regelabweichung den Ist-Wert 24 so zu regeln, dass er innerhalb des vorgegebenen Toleranzbandes 22 liegt. Gemäß der Figur 3 erfasst dabei der Regler 11 kontinuierlich die Regelabweichung 17 und entnimmt dem gespeicherten Toleranzband 22 einen entsprechenden Steuerwert für die Ansteuerung der Hydraulik 12, 13 . Eine Hydraulik 13 erhöht nun beispielsweise den Druck im Bremssystem und erhöht somit die Verzögerung des Fahrzeugs 14. Die Ist-Verzögerung wird nun gemessen und daraus wieder die Regelabweichung 17 bestimmt.

Liegt nun der Ist-Wert für die Regelgröße f(t) entsprechend dem linken Teil des Diagramms der Figur 4 außerhalb des Toleranzbandes 22, dann greift eine Korrektureinrichtung 15 ein und führt beispielsweise durch Erhöhung des Ansteuerstromes für das Elektro-Magnetventil 1 den Ist-Wert 24 der Regelgröße in das I/P- Kennlinienfeld 16 zurück. Danach übernimmt der Regler 11 wieder aufgrund des gespeicherten Kennlinienfeldes die Ansteuerung für die Hydraulik 12, 13. Mit Hilfe der Korrektureinrichtung 15 erfolgt somit eine adaptive Korrektur der Regelcharakteristik. Alternativ ist beispielsweise im rechten Teil der Figur 4 eine Absenkung des Ansteuerstromes erforderlich, da der Ist-Wert unterhalb des Toleranzbandes 22 liegt.

## Patentansprüche

1. Steuerschaltung für ein steuerbares Elektro-Magnetventil einer Bremsanlage eines Kraftfahrzeugs zur Einstellung einer Haltekraft für einen Ventil-Verschlusskörper (4) des Magnetventils (1)
- mit einem Regler (11), der den Erregerstrom für das Magnetventil (1) entsprechend dem Sollwert einer vorgegebenen Regelgröße (f(t)) vorgibt und
- des weiteren mit einer Korrektureinrichtung (15), die den Erregerstrom erhöht bzw. absenkt, wenn der Ist-Wert (21) ein vorgegebenes Toleranzband (22) für den Sollwert der Regelgröße (f(t)) verlässt,
**dadurch gekennzeichnet, dass**
der Regler (11) den Ist-Wert (24) der Regelgröße (f(t)) innerhalb des vorgegebenen Toleranzbandes (22) für den Sollwert der Regelgröße (f(t)) regelt.

2. Steuerschaltung nach Anspruch 1, **dadurch gekennzeichnet, dass** die Korrektureinrichtung (15) zur Änderung des Erregerstromes in Abhängigkeit von der Schließkraft (F_{K}) des Elektro-Magnetventils (1) ausgebildet ist.

3. Steuerschaltung nach Anspruch 1 oder 2, **dadurch gekennzeichnet, dass** die Korrektureinrichtung (15) als Regelgröße (f(t)) eine Strom-/Druck- Kennlinie (I/P-Kennlinie) vorgibt.

4. Steuerschaltung nach einem der vorhergehenden Ansprüche, **dadurch gekennzeichnet, dass** die Korrektureinrichtung (15) zur Korrektur des Ist-Wertes der Bremsverzögerung ausgebildet ist.

5. Steuerschaltung nach einem der vorhergehenden Ansprüche, **dadurch gekennzeichnet, dass** die Korrektureinrichtung (15) zur Korrektur des Ist-Wertes der Fahrzeuggeschwindigkeit ausgebildet ist.

6. Steuerschaltung nach einem der vorhergehenden Ansprüche, **dadurch gekennzeichnet, dass** die Korrektureinrichtung (15) zur Korrektur des Ist-Wertes eines Radschlupfwertes ausgebildet ist.

7. Steuerschaltung nach einem der vorhergehenden Ansprüche, **dadurch gekennzeichnet, dass** die Korrektureinrichtung (15) ausgebildet ist, in Verbindung mit einem Abstandsregler (ACC) bei Unterschreiten eines Sollwertes für den Abstand zu einem Hindernis einen Bremseingriff durchzuführen.

8. Steuerschaltung nach einem der vorherigen Ansprüche, **dadurch gekennzeichnet, dass** ein Speicher, vorzugsweise ein EEPROM vorgesehen ist, in dem Korrekturwerte für den Ansteuerstrom in Abhängigkeit vom Sollwert der Regelgröße (f(t)) und/oder dem Toleranzband (22) abgelegt sind.

9. Steuerschaltung nach einem der vorhergehenden Ansprüche, **dadurch gekennzeichnet, dass** die Korrektureinrichtung (15) einen Rechner aufweist, der mittels eines Softwareprogrammes den Ist-Wert der Regelgröße (f(t)) berechnet.

10. Steuerschaltung nach einem der vorhergehenden Ansprüche, **dadurch gekennzeichnet, dass** die Korrektureinrichtung (15) zur Steuerung eines Antiblockiersystems (ABS) und/oder eines Fahrdynamikreglers (FDR,ESP) ausgebildet ist.

## Claims

1. Control circuit for a controllable solenoid valve of a brake system of a motor vehicle for setting a holding force for a valve closure body (4) of the solenoid valve (1),
- having a regulator (11) which predefines the exciter current for the solenoid valve (1) in accordance with the setpoint value of a predefined controlled variable (f(t)), and
- also having a correction device (15) which increases or decreases the exciter current if the actual value (21) leaves a predefined tolerance band (22) for the setpoint value of the controlled variable (f(t)),
- **characterized in that** the regulator (11) regulates the actual value (24) of the controlled variable (f(t)) within the predefined tolerance band (22) for'the setpoint value of the controlled variable (f(t)).

2. Control circuit according to Claim 1, **characterized in that** the correction device (15) is designed to change the exciter current as a function of the closing force (F_{K}) of the solenoid valve (1).

3. Control circuit according to Claim 1 or 2, **characterized in that** the correction device (15) predefines, as controllec variable (f(t)), a current/pressure characteristic curve (I/P characteristic curve).

4. Control circuit according to one of the preceding claims, **characterized in that** the correction device (15) is designed to correct the actual value of the braking deceleration.

5. Control circuit according to one of the preceding claims, **characterized in that** the correction device (15) is designed to correct the actual value of the speed of the vehicle.

6. Control circuit according to one of the preceding claims, **characterized in that** the correction device (15) is designed to correct the actual value of a wheel slip value.

7. Control circuit according to one of the preceding claims, **characterized in that** the correction device (15) is designed to carry out a breaking intervention in conjunction with a distance controller (ACC) when the distance from an obstacle drops below a setpoint value.

8. Control circuit according to one of the preceding claims, **characterized in that** a memory, preferably an EEPROM, is provided in which correction values for the actuation current are stored as a function of the setpoint value of the controlled variable (f(t)) and/or tolerance band (22).

9. Control circuit according to one of the preceding claims, **characterized in that** the correction device (15) has a computer which calculates the actual value of the controlled variable (f(t)) by means of a software program.

10. Control circuit according to one of the preceding claims, **characterized in that** the correction device (15) is designed to control an anti-lock brake system (ABS) and/or a regulator for the dynamics of vehicle movement (FDR, ESP).

## Revendications

1. Circuit de commande pour une soupape électromagnétique commandable d'une installation de freinage automobile afin de régler une force de maintien pour un corps de fermeture de la soupape (4) de la soupape magnétique (1), comprenant :
- un régulateur (11) qui pré-définit le courant d'excitation de la soupape magnétique (1) conformément à la valeur de consigne d'une amplitude de régulation (f(t)) pré-définie et
- en outre, un dispositif de correction (15) qui augmente ou diminue le courant d'excitation, si la valeur réelle (21) dépasse une bande de tolérance (22) pré-définie pour la valeur de consigne de l'amplitude de régulation (f(t)),
**caractérisé en ce que**
le régulateur (11) régule la valeur réelle (24) de l'amplitude de régulation (f(t)) à l'intérieur de la bande de tolérance pré-définie (22) pour la valeur de consigne de l'amplitude de régulation (f(t)).

2. Circuit de commande selon la revendication 1,
**caractérisé en ce que**
le dispositif de correction (15) est conçu pour modifier le courant d'excitation en fonction de la force de fermeture (F_{K}) de la soupape électromagnétique (1).

3. Circuit de commande selon la revendication 1 ou 2,
**caractérisé en ce que**
le dispositif de correction (15) pré-définit comme amplitude de régulation (f(t)) une courbe caractéristique courant/pression (courbe caractéristique I/P).

4. Circuit de commande selon l'une quelconque des revendications précédentes,
**caractérisé en ce que**
le dispositif de correction (15) est conçu pour corriger la valeur réelle de la temporisation du freinage.

5. Circuit de commande selon l'une quelconque des revendications précédentes,
**caractérisé en ce que**
le dispositif de correction (15) est conçu pour corriger la valeur réelle de la vitesse du véhicule.

6. Circuit de commande selon l'une quelconque des revendications précédentes,
**caractérisé en ce que**
le dispositif de correction (15) est conçu pour corriger la valeur réelle d'une valeur de patinage de roue.

7. Circuit de commande selon l'une quelconque des revendications précédentes,
**caractérisé en ce que**
le dispositif de correction (15) est conçu pour exécuter, en liaison avec un régulateur de distance (ACC), une prise de freinage lors du dépassement par le bas d'une valeur de consigne appliquée à la distance par rapport à un obstacle.

8. Circuit de commande selon l'une quelconque des revendications précédentes,
**caractérisé en ce qu'**
une mémoire, de préférence une mémoire EEPROM est prévue pour stocker les valeurs de correction du courant d'amorçage en fonction de la valeur de consigne de l'amplitude de régulation (f(t)) et/ou de la bande de tolérance (22).

9. Circuit de commande selon l'une quelconque des revendications précédentes,
**caractérisé en ce que**
le dispositif de correction (15) présente un ordinateur qui calcule la valeur réelle de l'amplitude de régulation (f(t)) à l'aide d'un programme de logiciel.

10. Circuit de commande selon l'une quelconque des revendications précédentes,
**caractérisé en ce que**
le dispositif de correction (15) est conçu pour commander un antiblocage de sécurité (ABS) et/ou un régulateur de dynamique de conduite (FDR, ESP).
